# EUROPEAN PATENT SPECIFICATION

(11) **EP 4 064 582 B1**
(45) Date of publication and mention of the grant of the patent: **25.06.2025**
(21) Application number: 21738089.8
(22) Date of filing: 07.01.2021
(51) Int. Cl.: H04B 7/04, H04B 7/06, H04W 8/02, H04W 36/00, H04W 84/12

(54) **INFORMATION TRANSMISSION METHOD AND RELATED APPARATUS**
INFORMATIONSVERARBEITUNGSVERFAHREN UND ZUGEHÖRIGE VORRICHTUNG
PROCÉDÉ DE TRANSMISSION D'INFORMATIONS ET APPAREIL ASSOCIÉ

(30) Priority: 07.01.2020 CN 202010015753
(43) Date of publication of application: 28.09.2022
(73) Proprietor: Huawei Technologies Co., Ltd., Shenzhen, Guangdong 518129 (CN)
(72) Inventor: YU, Jian, Shenzhen, Guangdong 518129 (CN); LI, Yunbo, Shenzhen, Guangdong 518129 (CN)
(74) Representative: Epping - Hermann - Fischer
(86) International application number: PCT/CN2021/070550
(87) International publication number: WO 2021/139702

(56) References cited:
- EP-A1- 2 747 326
- WO-A1-2018/080603
- CN-A- 109 429 564
- CN-A- 109 922 489
- CN-A- 110 326 223
- JP-A- 2015 188 239
- US-A1- 2011 194 536
- US-A1- 2014 133 395
- US-A1- 2019 373 568

## Description

### TECHNICAL FIELD

This application relates to the field of wireless local area network technologies, and in particular, to a network device and a station.

### BACKGROUND

A wireless device sends multiple wireless signals at a same time, and each signal is a spatial stream. The wireless device uses a transmitter and an antenna of the wireless device to send spatial streams, and each spatial stream takes a different path to a receiver. More spatial streams indicate more chains for independent data processing, and a higher information transmission rate. To increase a quantity of spatial streams that can be provided by the wireless device, a coordinated transmission manner by multiple access points may be used to provide a larger quantity of spatial streams and to improve an information transmission rate.

A multiple basic service set identifier (multiple basic service set identifier, multiple BSSID) and a concept of a virtual cell are proposed in an 802.11 system. A station (station, STA) needs to obtain access information of a wireless network by using a beacon frame, to associate with an access point (access point, AP). In the Multiple BSSID, a wireless device in which the AP is located can obtain multiple basic service sets (basic service sets, BSSs) through virtualization, and each BSS corresponds to one AP. In this way, a larger quantity of spatial streams can be provided. However, the multiple BSSs correspond to a same antenna interface in this solution. In this case, all antennas of the wireless device need to share one antenna interface. Because antennas of a same antenna interface need to be disposed in a specific location range, due to a limitation of hardware conditions, a quantity of antennas that can be disposed on a same antenna interface is limited, and a quantity of spatial streams that can be provided by the wireless device is also limited. Document US 2014/0133395 A1 discusses that orthogonal multi-user, multiple input, multiple output (MU-MIMO) multiplexing capacity for demodulation reference signals (DMRSs) is increased without increasing the overhead in resource elements per physical resource block by using length-4 orthogonal cover codes (OCC-4). A base station switches between legacy DMRS antenna port mappings and OCC-4 mapping based upon either a transmission mode or a channel station information process configuration field value.

Document US 2011/0194536 A1 refers to a control information interpretation method for use in a mobile communication system including a terminal and a base station, wherein the terminal receives, from the base station, control information including transport block information and DeModulation Reference Signal (DM-RS) antenna port allocation indication information, checks a number of the transport blocks allocated to the terminal based on the transport block information, and interpreting the DM-RS antenna port allocation indication information according to the number of transport blocks.

Document EP 2 747 326 A1 refers to a method which is designed to execute adequate signaling even when individual user terminals perform communication to support separate types of communication, in MIMO transmission to use antennas having varying antenna configurations depending on the type of communication. A radio base station has an antenna that has varying antenna configurations between at least two types of communication and that can transmit signals to all areas which the radio base station covers, in an antenna configuration to support at least one communication type 1, allocates radio resources to a downlink signal including capacities of a user terminal and a signal type to match a communication type, multiplexes a plurality of reference signals to be used in each communication type on the same resource block, generates precoding weights which allow the antenna to form a number of beams to match the communication type, and multiplies a downlink signal to supply to the antenna by the generated precoding weights.

Document JP 2015-188239 A provides a method that efficiently notifies a UE of DMRS resource allocation information necessary to receive a downlink traffic signal in an LTE-A system, and effectively notifies the UE which DMRS resources are used for transmission to another UE in the same frequency section and time section as the UE. The method is for interpreting control information in a radio communication system including a terminal and a base station, and includes: a reception stage of receiving, from the base station, control information including information on at least one or more transmission blocks from a terminal base station and instruction information on DMRS antenna port allocation; a confirmation stage of confirming the number of transmission blocks allocated to the terminal by using the control information; and an interpretation stage of interpreting the instruction information on DMRS antenna port allocation by the number of transmission blocks.

### SUMMARY

The invention made is captured in the attached set of independent claims. Further features are captured in the attached set of dependent claims.

### BRIEF DESCRIPTION OF DRAWINGS

FIG. 1 is a schematic diagram of a network architecture of a communication system according to an embodiment of this application;
FIG. 2 is a schematic flowchart of an information transmission method according to an embodiment of this application not covered by the claims but useful for understanding the invention;
FIG. 3 is a schematic diagram of a scenario of correspondence information according to an embodiment of this application not covered by the claims but useful for understanding the invention;
FIG. 4 is a schematic diagram of a scenario of antenna interface grouping indication information according to an embodiment of this application not covered by the claims but useful for understanding the invention;
FIG. 5 is a schematic diagram of a structure of a correspondence information element provided in an embodiment of this application not covered by the claims but useful for understanding the invention;
FIG. 6 is another schematic flowchart of an information transmission method according to an embodiment of this application not covered by the claims but useful for understanding the invention;
FIG. 7 is a schematic diagram of a structure of a color indication information element according to an embodiment of this application not covered by the claims but useful for understanding the invention;
FIG. 8 is a schematic flowchart of an information transmission method according to an embodiment of this application;
FIG. 9 is a schematic diagram of a structure of a fast roaming information element according to an embodiment of this application;
FIG. 10 is a schematic diagram of another structure of a fast roaming information element according to an embodiment of this application;
FIG. 11 is yet another schematic flowchart of an information transmission method according to an embodiment of this application not covered by the claims but useful for understanding the invention;
FIG. 12 is a schematic diagram of a structure of an MP device according to an embodiment of this application;
FIG. 13 is a schematic diagram of a module of a network device according to an embodiment of this application;
FIG. 14 is a schematic diagram of a module of a STA according to an embodiment of this application;
FIG. 15 is a schematic diagram of a structure of a network device according to an embodiment of this application;
FIG. 16 is a schematic diagram of another structure of a network device according to an embodiment of this application; and
FIG. 17 is a schematic diagram of a structure of a STA according to an embodiment of this application.

### DESCRIPTION OF EMBODIMENTS

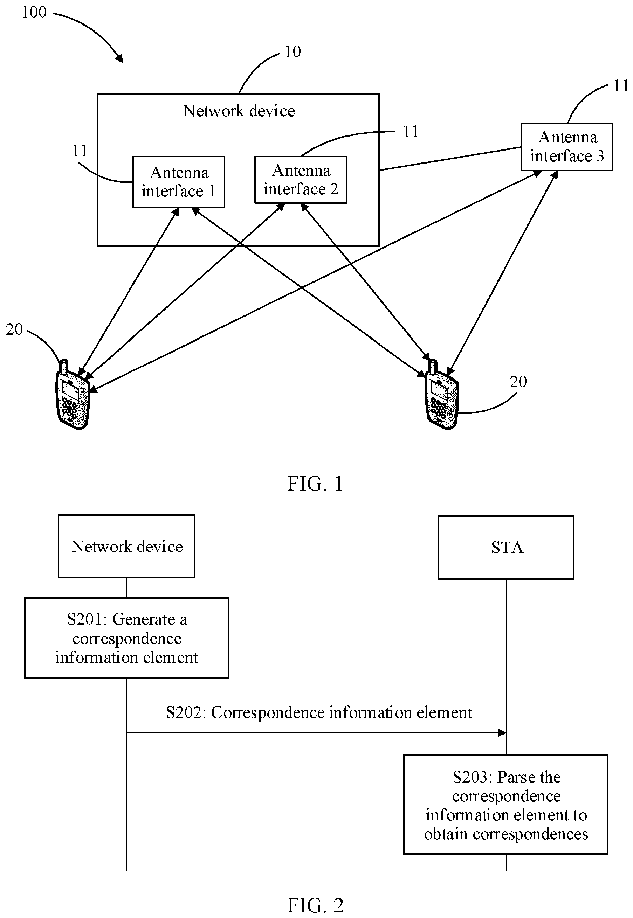

The invention made is explained in the embodiments relating to figures 1, and 13 - 17.

The following describes embodiments of the present invention with reference to accompanying drawings in embodiments of the present invention.

FIG. 1 is a schematic diagram of a network architecture of a communication system according to an embodiment of this application. The communication system 100 includes a network device 10 and one or more STAs 20. The network device 10 includes multiple antenna interfaces 11. One or more antennas may be deployed on each antenna interface 11. The network device 10 includes multiple basic service sets (Multiple Basic Service Set Identifier, BSS). At least two BSSs correspond to different antenna interfaces 11. Each BSS includes one access point (Access Point, AP) of the network device.

In this case, the network device 10 includes multiple antenna interfaces. Therefore, the network device including the multiple antenna interfaces can break through a limitation on a quantity of antennas of a device including a single antenna interface. In this way, more antennas can be configured for the network device, and the network device can provide more spatial streams to improve a network coverage capability of the network device. In addition, this can reduce costs and complexity of deployment of multiple antennas, and improve scalability.

Based on the communication system 100, the network device 10 may use at least one BSS in the multiple BSSs to send correspondences between the BSSs and the antenna interfaces 11 to the STA 20. In this way, the STA 20 can select, based on the correspondences, one or more BSSs in the multiple BSSs for association, and communicate with the one or more BSSs. When communicating with the one or more BSSs, the STA 20 can obtain an antenna interface corresponding to the BSS that communicates with the STA 20. This helps the STA perform link adaptation.

It should be noted that multiple antenna interfaces may include one or more antenna interfaces whose deployment locations are far from those of the other antenna interfaces. The one or more antenna interfaces may be referred to as a remote antenna interface or remote antenna interfaces. For example, an antenna interface 3 in FIG. 1 is far from an antenna interface 1 and an antenna interface 2. In this way, the network device includes a remote antenna interface, improving flexibility of antenna deployment.

The network device mentioned in embodiments of this application may be an apparatus or a chip having a wireless communication function. A product form of the network device may be but is not limited to, for example, a communication server, a router, a switch, a bridge, a computer, or a chip that supports a WLAN communication function. The STA mentioned in embodiments of this application may be an apparatus or a chip having a wireless communication function. A product form of the STA may be but is not limited to, for example, a product form of a tablet computer, a laptop computer, a mobile internet device, a palmtop computer, a desktop computer, a mobile phone, or another user terminal; or a chip that supports a WLAN communication function. The method in this application may be applied to a WLAN network, an internet of things network, an internet of vehicles network, and the like.

An embodiment of this application provides an information transmission method applied to the foregoing communication system. FIG. 2 is a schematic flowchart of an information transmission method according to an embodiment of this application. As shown in FIG. 2, the information transmission method in this embodiment of this application includes the following steps.

S201: A network device generates a correspondence information element.

The correspondence information element includes correspondence indication information, and the correspondence indication information is used to indicate correspondences between BSSs and antenna interfaces.

S202: The network device sends the correspondence information element to a STA.

Correspondingly, the STA receives the correspondence information element.

S203: The STA parses the correspondence information element to obtain the correspondences.

In this way, according to a technical solution of embodiments of this application, the network device sends the correspondence information element to the STA, and includes, in the correspondence information element, the correspondence indication information used to indicate the correspondences between the basic service sets and the antenna interfaces. Therefore, the STA can obtain an antenna interface corresponding to each BSS based on the correspondences, and select, based on the antenna interface corresponding to each BSS, an AP included in one or more BSSs for association.

In addition, in this solution, the STA can clearly know, based on address information of a received signal, to communicate with which antenna interface. This helps the STA perform link adaptation. For example, when a physical layer protocol data unit (PHY Protocol Data Unit, PPDU) signal suddenly weakens because an antenna interface is switched, the STA can obtain, based on the PPDU signal, a BSS that sends the PPDU, and obtain, based on the correspondences, an antenna interface corresponding to the BSS that sends the PPDU signal. Therefore, it can be determined that the weakening of the signal is caused by switching of the antenna interface.

Optionally, in the multiple BSSs included in the network device, APs corresponding to at least two BSSs corresponding to different antenna interfaces may form an AP coordination group. In this way, the network device may provide an AP coordination service for the STA by using the AP coordination group. This can improve information transmission efficiency. For example, as shown in FIG. 1, a BSS 1 corresponding to the antenna interface 1 includes an AP 1, a BSS 2 corresponding to the antenna interface 2 includes an AP 2, and a BSS 3 corresponding to the antenna interface 3 includes an AP 3. The AP 1, the AP 2, and the AP 3 may form an AP coordination group, to provide services for the STA. The STA can simultaneously obtain data via the AP 1, the AP 2, and the AP 3, so that efficiency in obtaining data by the STA can be improved.

In some optional embodiments, the correspondence indication information includes quantity information and correspondence information. The quantity information may include a quantity of BSSs. The quantity information may alternatively include a quantity of antenna interfaces. The quantity information may alternatively include a quantity of BSSs and a quantity of antenna interfaces.

The correspondence information may be represented by a correspondence bitmap. For example, when the correspondences are represented by a correspondence bitmap, each digit in the correspondence bitmap sequentially represents one BSS. 1-0 digit flipping or 0-1 digit flipping may be used to indicate that a BSS corresponding to a next digit in the bitmap is switched to and corresponds to another antenna interface.

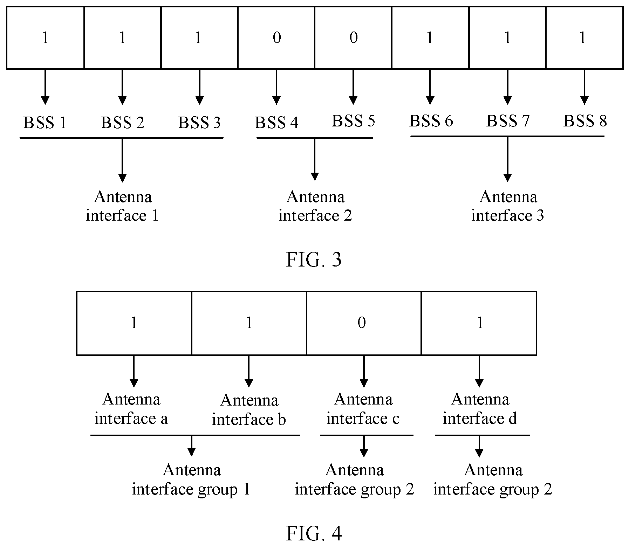

For example, the network device belongs to (or includes) eight BSSs, and the network device includes three antenna interfaces in total. First three BSSs correspond to a first antenna interface, a fourth BSS and a fifth BSS correspond to a second antenna interface, and last three BSSs correspond to a third antenna interface. In this case, the correspondences are represented as 11100111 in a bitmap. FIG. 3 is a schematic diagram of a scenario of correspondence information according to an embodiment of this application. As shown in FIG. 3, the eight BSSs are sequentially denoted as a BSS 1, a BSS 2, a BSS 3, a BSS 4, a BSS 5, a BSS 6, a BSS 7, and a BSS 8. "1" in first three bits in the correspondence bitmap indicates that the BSS 1, the BSS 2, and the BSS 3 correspond to the first antenna interface (the antenna interface 1). "1" in a third bit is switched to "0" in a fourth bit, indicating that the BSS 3 corresponding to the third bit and the BSS 4 corresponding to the fourth bit correspond to different antenna interfaces. The BSS 4 corresponding to "1" in the fourth bit in the correspondence bitmap to "0" ("0" in the fourth bit and a fifth bit) before next digit flipping correspond to a same antenna interface (the antenna interface 2). "0" in the fifth bit in the correspondence bitmap is switched to "1" in a sixth bit in the correspondence bitmap, indicating that the BSS 5 corresponding to "0" in the fifth bit and the BSS 6 corresponding to "1" in the sixth bit correspond to different antenna interfaces. The sixth bit to "1" ("1" in the sixth bit to an eighth bit) before next digit flipping all correspond to a same antenna interface (the antenna interface 3).

In an embodiment, the quantity information includes a quantity of BSSs. In this way, the STA may determine, based on the quantity of BSSs, a length of a correspondence bitmap that needs to be read. For example, when the quantity of BSSs is 8, the STA determines that the correspondence bitmap that needs to be read is 8 bits.

In another embodiment, the quantity information includes a quantity of antenna interfaces. In this way, the STA may obtain, based on the quantity of antenna interfaces, a quantity of digit flipping times used in a correspondence bitmap, to obtain a length of the correspondence bitmap. For example, when there are three antenna interfaces, the STA may determine that an end bit in the correspondence bitmap is at fourth digit flipping. In other words, when a bitmap is represented as 111001110, the STA may determine that the correspondence bitmap ends at 1-0 of an eighth bit, that is, the correspondence bitmap is 11100111.

In another embodiment, the quantity information includes a quantity of BSSs and a quantity of antenna interfaces. In this way, the STA may determine, based on the quantity of BSSs, a length of a correspondence bitmap that needs to be read. Alternatively, the STA may obtain, based on the quantity of antenna interfaces, a quantity of digit flipping times used in a correspondence bitmap, to obtain a length of the correspondence bitmap.

It should be noted that the correspondence information is not limited to being represented by a correspondence bitmap, and may also be represented in another manner. For example, the correspondence information may be represented by a correspondence table. The correspondence table may include correspondences between identifiers of the antenna interface and identifiers of the BSSs. In this case, the station may obtain the correspondences between the antenna interfaces and the BSSs based on the correspondences between the identifiers of the antenna interfaces and the identifiers of the BSSs.

In some optional embodiments, the multiple antenna interfaces belong to at least two antenna interface groups, the correspondence information element further includes antenna interface grouping indication information, and the antenna interface grouping indication information is used to indicate an antenna interface included in each antenna interface group.

In this case, the multiple antenna interfaces are grouped to obtain at least two antenna interface groups. It may be understood that a correspondence exists between the BSS and an antenna interface group in which the corresponding antenna interface is located. The correspondence information element includes a correspondence between each antenna interface group and a BSS. When each antenna interface group includes only one antenna interface, the correspondence is a correspondence between the BSS and a corresponding antenna interface. In this way, when multiple antenna interfaces are close to each other, the multiple antenna interfaces that are close to each other may be grouped into one antenna interface group. This can simplify a correspondence, and save a communication resource.

Specifically, the antenna interface grouping indication information includes a grouping bitmap used to indicate an antenna interface included in each antenna interface group. For example, each bit in the grouping bitmap sequentially represents one antenna interface, and 1-0 digit flipping or 0-1 digit flipping may be used to indicate that an antenna interface corresponding to a next digit in the grouping bitmap belongs to another antenna interface group.

For example, when the network device includes four antenna interfaces, a first antenna interface and a second antenna interface belong to one antenna interface group (denoted as an antenna interface group 1), a third antenna interface belongs to a second antenna interface group (denoted as an antenna interface group 2), and a fourth antenna interface belongs to a third antenna interface group (denoted as an antenna interface group 3), a grouping bitmap used for the antenna interface included in each antenna interface group is 1101. FIG. 4 is a schematic diagram of a scenario of antenna interface grouping indication information according to an embodiment of this application. As shown in FIG. 4, the four antenna interfaces are sequentially denoted as an antenna interface a, an antenna interface b, an antenna interface c, and an antenna interface d. "11" in a first bit and a second bit in the grouping bitmap indicates that the antenna interface a and the antenna interface b belong to one antenna interface group (the antenna interface group 1). "1" in the second bit in the grouping bitmap is flipped to "0" in a third bit in the grouping bitmap, indicating that the antenna interface c corresponding to "0" in the third bit and the antenna interface b corresponding to "1" in the second bit belong to different antenna interface groups. In other words, "0" in the third bit indicates that the antenna interface c belongs to the antenna interface group 2. "0" in the third bit in the grouping bitmap is flipped to "1" in a fourth bit in the grouping bitmap, indicating that the antenna interface d corresponding to "1" in the fourth bit and the antenna interface c corresponding to "0" in the third bit belong to different antenna interface groups. In other words, "1" in the fourth bit belongs to the antenna interface group 3.

The antenna interface grouping indication information may further include a quantity of antenna interfaces of the network device and/or a quantity of antenna interface groups of the network device.

When the quantity information includes a quantity of antenna interfaces, the STAmay determine, based on the quantity of antenna interfaces, a length of a grouping bitmap that needs to be read. For example, when the quantity of antenna interfaces is 4, the STA reads the 4-bit grouping bitmap.

When the quantity information includes a quantity of antenna interface groups, the STA may obtain, based on the quantity of antenna interface groups, a quantity of digit flipping times used in a grouping bitmap, to obtain a length of the grouping bitmap. For example, when there are three antenna interface groups, the STA may determine that an end bit of the grouping bitmap is at fourth digit flipping. In other words, when a bitmap is represented as 1101000, the STA may determine that the grouping bitmap ends at 1-0 of a fourth bit, that is, the grouping bitmap is 1101.

It should be noted that the antenna interface grouping indication information is not limited to being represented by a grouping bitmap. For example, in another embodiment, the antenna interface grouping indication information may include an antenna interface grouping table, and the antenna interface grouping table includes an identifier of each antenna interface group and an identifier of an antenna interface corresponding to the identifier of each antenna interface group. In this case, the station may obtain, based on the identifier of the antenna interface corresponding to the identifier of each antenna interface group, the antenna interface included in each antenna interface group.

Further, the correspondence between each antenna interface group and the BSS may alternatively be represented by a group correspondence bitmap. Each digit in a correspondence bitmap sequentially represents one BSS. 1-0 digit flipping or 0-1 digit flipping may be used to indicate that a BSS corresponding to a next digit in the bitmap is switched to and corresponds to another antenna interface group.

For example, the network device includes four antenna interfaces in total: an antenna interface a, an antenna interface b, an antenna interface c, and an antenna interface d. The four antenna interfaces are divided into three antenna interface groups. The antenna interface a and the antenna interface b belong to an antenna interface group 1, the antenna interface c belongs to an antenna interface group 2, and the antenna interface d belongs to an antenna interface group 3. The network device includes eight BSSs: a BSS 1, a BSS 2, a BSS 3, a BSS 4, a BSS 5, a BSS 6, a BSS 7, and a BSS 8. The BSS 1 to the BSS 3 correspond to the antenna interface a, the BSS 4 and the BSS 5 correspond to the antenna interface b, the BSS 6 and the BSS 7 correspond to the antenna interface c, and the BSS 8 corresponds to the antenna interface d. Therefore, because the antenna interface a and the antenna interface b belong to the antenna interface group 1, the BSS 1 to the BSS 5 correspond to the antenna interface group 1, the BSS 6 and the BSS 7 correspond to the antenna interface group 2, and the BSS 8 corresponds to the antenna interface group 3. In this case, the group correspondence bitmap is 11111001. First five " 1" in the group correspondence bitmap indicate that the BSS 1 to the BSS 5 correspond to a same antenna interface group (the antenna interface group 1). "1" in a fifth bit in the group correspondence bitmap is switched to "0" in a sixth bit in the group correspondence bitmap, indicating that the BSS 5 represented by the fifth bit and the BSS 6 represented by the sixth bit correspond to different antenna interface groups (the BSS 5 corresponds to the antenna interface group 1, and the BSS 6 corresponds to the antenna interface group 2). The BSS 7 represented by a seventh bit in the group correspondence bitmap and the BSS 6 represented by the sixth bit in the group correspondence bitmap correspond to a same antenna interface group (the antenna interface group 2). "0" in the seventh bit in the group correspondence bitmap is switched to "1" in an eighth bit in the group correspondence bitmap, indicating that the BSS 7 represented by the seventh bit and the BSS 8 represented by the eighth bit correspond to different antenna interface groups (the BSS 7 corresponds to the antenna interface group 2, and the BSS 8 corresponds to the antenna interface group 3).

In some optional embodiments, the correspondence information element further includes BSS indication information, and the BSS indication information is used to indicate a BSS that sends the correspondence information element.

In step S202, the network device may use one or more BSSs to send the correspondence information element to the STA. In this way, based on a correspondence information element sent by one of the BSSs, the STA can obtain another BSS used to send a correspondence information element. When the network device uses multiple BSSs to send the correspondence information element to the STA, overall coverage of the network device can be ensured.

In this application, each BSS includes one AP. It may be understood that each AP corresponds to one BSS. The network device may include an AP corresponding to only one BSS, and the AP sends the correspondence information element to the STA. Alternatively, the network device may include APs corresponding to multiple BSSs, and the APs send the correspondence information element to the STA.

In an embodiment, the BSS indication information indicates a BSS used to send a correspondence information element.

In this case, the BSS indication information can indicate, by indicating the BSS, an AP used to send the correspondence information element.

In another embodiment, the BSS indication information indicates an AP used to send a correspondence information element. In this case, the BSS indication information can also indicate, by indicating the AP that sends the correspondence information element, a BSS corresponding to the AP used to send the correspondence information element.

Further, the correspondence information may be carried in a management frame. In other words, the network device sends a management frame to the STA, where the management frame includes the correspondence information element. The management frame may be but is not limited to a beacon (beacon) frame, a probe response (probe response) frame, or an association response (association response) frame.

When the network device uses multiple BSSs to send the correspondence information element to the STA, the multiple BSSs may simultaneously send the correspondence information element to the STA, or the multiple BSSs may send the correspondence information element at different time. For example, when the network device sends a management frame to the STA to the multiple BSSs, and the management frame carries the correspondence information element, the multiple BSSs may simultaneously send the management frame to the STA, or the multiple BSSs may separately send the management frame at different time. When the multiple BSSs simultaneously send the correspondence information element to the STA, coverage of the management frame can be improved. When the multiple BSSs alternatively send the correspondence information element at different time, the STA may receive the management frame at different time, so that a success rate that the STA receives the management frame can be improved.

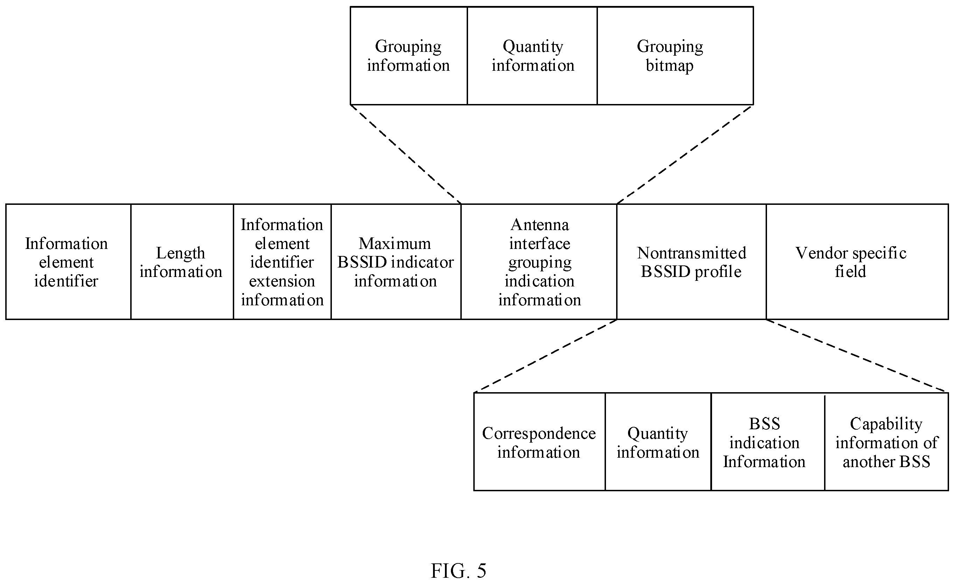

FIG. 5 is a schematic diagram of a structure of a correspondence information element provided in an optional embodiment of this application. An information element includes an information element identifier, length information, information element identifier extension information, maximum BSSID indicator (Max BSSID Indicator) information, antenna interface grouping indication information, a nontransmitted BSSID profile (Nontransmitted BSSID profile), and a vendor specific (Vendor specific) field.

The information element identifier is used to identify that the information element is a correspondence information element. The length information is used to indicate a length of the correspondence information element. The length information may be in a unit of byte. The information element identifier extension information is used to further supplement and extend an information element type indicated by the information element when the quantity of information element identifiers is insufficient.

The maximum BSSID indicator information is used to indicate a maximum quantity of BSSs included in the network device. For example, when the network device includes eight BSSs, the maximum BSSID indicator information is 8. The antenna interface grouping indication information includes grouping information, quantity information, and a grouping bitmap. When the grouping information indicates no grouping, both a grouping quantity and the grouping bitmap are null. Alternatively, when the grouping information indicates no grouping, the antenna interface grouping information may not include the grouping quantity and the grouping bitmap. The quantity information in the antenna interface grouping indication information includes a quantity of antenna interfaces and/or a quantity of antenna interface groups. For description of the grouping bitmap, refer to the foregoing embodiments. Details are not described herein again.

The nontransmitted BSSID profile includes correspondence information, quantity information, basic service set indication information, and capability information of another BSS. The correspondence information and the quantity information are correspondence indication information. When the grouping information in the antenna interface grouping indication information indicates grouping, the correspondence information is a correspondence between an antenna interface group and a BSS. Alternatively, when the grouping information indicates no grouping, the correspondence information is a correspondence between an antenna interface and a BSS. For an implementation of the correspondence information element, refer to the foregoing embodiments. Details are not described herein again. The capability information of another BSS includes capability information and other management information of a BSS that is not used to send a correspondence information element. The other management information may be, for example, operation element. The operation element (Operation element) is used to indicate information required for current running of a BSS. The operation information may include a currently supported modulation and coding scheme (Modulation and Coding Scheme, MCS), a quantity of spatial streams, and the like. The operation information may include but is not limited to, for example, high throughput operation information in 802. 11n, very high throughput operation information in 802. 11ac, and efficient operation information in 802. 11ax.

The vendor specific field may be set by each vendor. Content of the vendor specific field is not limited or defined in embodiments of this application.

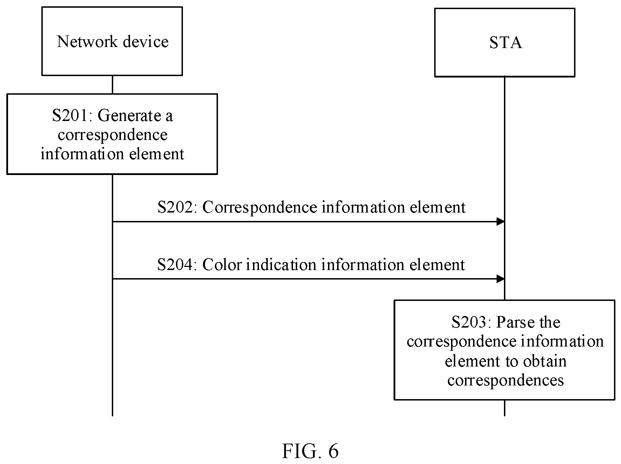

It should be noted that, in embodiments of this application, a name of the correspondence information element is not limited to "correspondence information element", and may alternatively be another name. In embodiments of this application, content and functions of the correspondence information element are limited, but the name is not limited. FIG. 6 is another schematic flowchart of an information transmission method according to an embodiment of this application. Based on the embodiment shown in FIG. 2, in some optional embodiments, the information transmission method further includes:
S204: The network device sends a color indication information element to the station. The color indication information element includes color indication information, and the color indication information is used to indicate a basic service set color (BSS color) of a BSS of each antenna interface group.

In this case, because BSS colors of BSSs vary with different antenna interface groups, the station can obtain a BSS color of each antenna interface group based on the color indication information. In this way, APs corresponding to BSSs of different antenna interface groups in the network device may share space, to improve resource utilization and a system capacity.

In embodiments of this application, step S202 and step S204 may be performed concurrently, step S202 may be performed first, or step S204 may be performed first. S204, step S201 and step S203 are not subject to a specific sequence in embodiments of this application.

The color indication information element may also be carried in a management frame. The network device sends a management frame to the station, where the management frame includes the color indication information element.

The color indication information element and the correspondence indication information may be carried in a same management frame for sending. In this case, step S202 and step S204 are performed concurrently. The color indication information element and the correspondence indication information may be carried in different management frames for sending. For example, a management frame may include the correspondence information element and the color indication information element. For another example, a management frame includes the correspondence information element, and another management frame includes the color indication information element. In this case, step S202 and step S204 may be performed concurrently, step S202 may be performed first, or step S204 may be performed first. It should be noted that the color indication information element is not limited to being carried in the management frame and sent to the STA. In some optional embodiments, the color indication information element may alternatively be carried in a physical layer protocol data unit (PHY Protocol Data Unit, PPDU). The network device sends a PPDU to the station, where the PPDU includes the color indication information element.

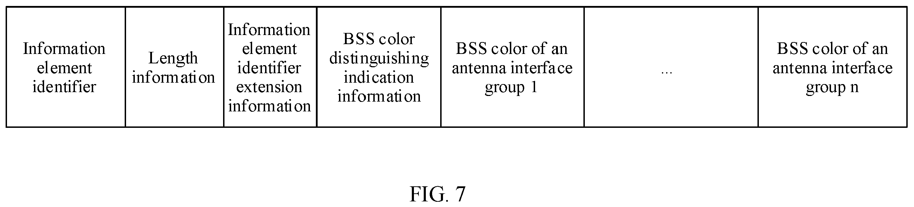

FIG. 7 is a schematic diagram of a structure of a color indication information element according to an embodiment of this application. Color indication information includes an information element identifier, length information, information element identifier extension information, BSS color distinguishing indication information, and a BSS color of each antenna interface group. The BSS color of each interface group is the color indication information.

For description of the information element identifier, the length information, and the information element identifier extension information, refer to the foregoing embodiments. Details are not described herein again.

When the color distinguishing indication information indicates that a same BSS color is used, the BSS color of each antenna interface group is null.

When the antenna interface grouping indication information indicates that antenna interface grouping is not performed, each antenna interface may be understood as one antenna interface group.

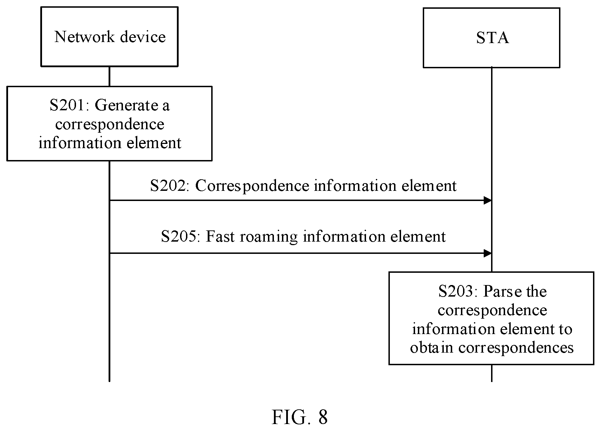

FIG. 8 is still another schematic flowchart of an information transmission method according to an embodiment of this application. Based on the embodiment in FIG. 2, in some optional embodiments, the information transmission method further includes:
S205: The network device sends a fast roaming information element to the station, where the fast roaming information element includes fast roaming grouping indication information, and the fast roaming grouping indication information is used to indicate BSSs included in a fast roaming group.

After authenticating and associating with a BSS 1 in a fast roaming group, the STA needs to roam to and associate with another BSS 2 in the fast roaming group. In this case, the STA may directly roam to and associate with the BSS 2 without disassociating (de-associating) with the BSS 1 or authenticating the BSS 2. In other words, when the STA switches association in multiple BSSs in a same fast roaming group, the STA does not need to disassociate with a BSS before switching, and does not need to authenticate a BSS after switching. The STA may directly switch to and associate with one BSS in the fast roaming group to another BSS in the fast roaming group, to implement fast roaming. In embodiments of this application, step S202 and step S205 may be performed concurrently, step S202 may be performed first, or step S205 may be performed first. S205, step S201 and step S203 are not subject to a specific sequence in embodiments of this application.

The fast roaming information element may also be carried in a management frame. The network device sends a management frame to the station, where the management frame includes the color indication information element. The fast roaming information element and the correspondence indication information may be carried in a same management frame for sending. In this case, step S202 and step S205 are performed concurrently.

The fast roaming information element and the correspondence indication information may be carried in different management frames for sending. For example, a management frame may include the correspondence information element and the color indication information element. For another example, a management frame includes the correspondence information element, and another management frame includes the color indication information element. In this case, step S202 and step S205 may be performed concurrently, step S202 may be performed first, or step S205 may be performed first.

Optionally, the fast roaming information element further includes a quantity of the fast roaming groups. In this case, the station may obtain the quantity of fast roaming groups. In this way, a length of fast roaming grouping indication information to be read may be determined based on the quantity of fast roaming groups.

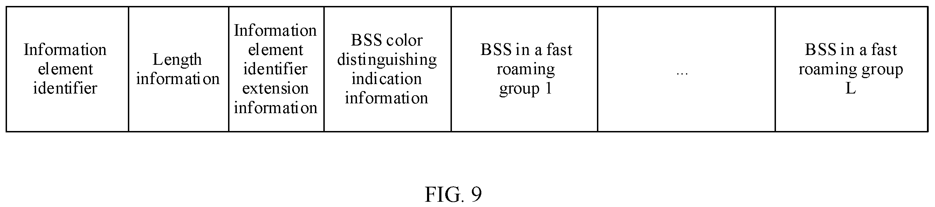

FIG. 9 is a schematic diagram of a structure of a fast roaming information element according to an embodiment of this application. As shown in FIG. 9, the fast roaming information element includes an information element identifier, length information, information element identifier extension information, and BSSs included in each fast roaming group (for example, in FIG. 9, BSSs included in a fast roaming group 1 to BSSs included in a fast roaming group L, where L is a quantity of fast roaming groups, L is a positive integer greater than or equal to 1, and when L is equal to 1, the BSSs included in each fast roaming group include only BSSs included in the fast roaming group 1). Specifically, the BSSs included in each fast roaming group may be identified by an identifier of each fast roaming group. The BSSs included in each fast roaming group may be understood as fast roaming grouping indication information.

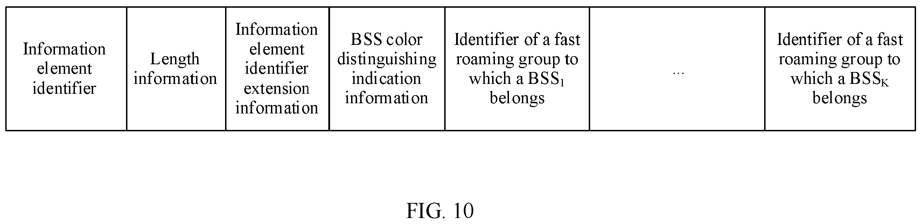

FIG. 10 is a schematic diagram of another structure of a fast roaming information element according to an embodiment of this application. As shown in FIG. 10, the fast roaming information element includes an information element identifier, length information, information element identifier extension information, and an identifier of a fast roaming group to which each BSS belongs (for example, in FIG. 10, an identifier of a fast roaming group to which a BSS 1 belongs to an identifier of a fast roaming group to which a BSS K belongs, where K is a quantity of BSSs, and K is a positive integer greater than 1). If a BSS does not belong to any fast roaming group, a fast roaming group of the BSS is null. The identifier of a fast roaming group to which each BSS belongs may be understood as fast roaming grouping indication information.

For description of the information element identifier, the length information, and the information element identifier extension information in embodiments corresponding to FIG. 9 and FIG. 10, refer to the foregoing embodiments. Details are not described herein again.

In an embodiment, the network device may send a correspondence information element to the STA, send a color indication information element to the STA, and further send a fast roaming information element to the STA. The three information elements may be sent simultaneously or separately. A sending sequence of the three information elements is not limited in embodiments of this application.

It should be noted that the fast roaming information element in embodiments of this application is not limited to being sent only by the network device in embodiments of this application to the STA. In an optional embodiment, the network device includes multiple BSSs, and at least two BSSs belong to a same fast roaming group. In this case, the network device may also send a fast roaming information element to the STA. In other words, the network device that sends the fast roaming information element may not include multiple antenna interfaces.

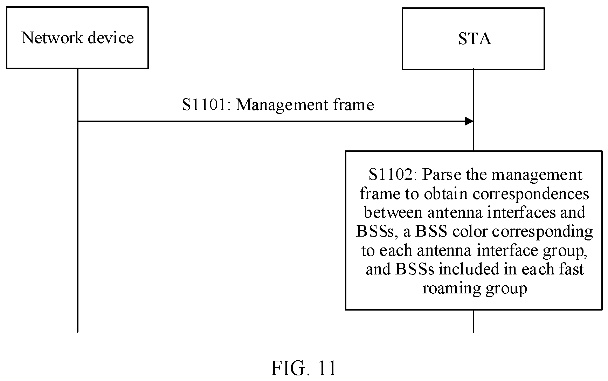

In an optional embodiment, a correspondence information element, a color indication information element, and a fast roaming information element may be carried in a same management frame and sent to the STA. FIG. 11 is another schematic flowchart of an information transmission method according to an embodiment of this application. The information transmission method includes the following steps.

S1101: A network device sends a management frame to a STA.

The management frame includes a correspondence information element. The management frame may be but is not limited to a beacon (beacon) frame, a probe response (probe response) frame, or an association response (association response) frame.

The management frame includes the correspondence information element, a color indication information element, and a fast roaming information element. For description of the correspondence information element, the color indication information element, and the fast roaming information element, refer to the foregoing embodiments. To avoid redundancy, details are not described herein again.

S1102: The STA parses the management frame to obtain correspondences between antenna interfaces and BSSs, a BSS color corresponding to each antenna interface group, and BSSs included in each fast roaming group.

In this way, the correspondence information element, the color indication information element, and the fast roaming information element may be carried in the same management frame and sent to the STA, so that information transmission efficiency can be improved, and communication resources can be saved.

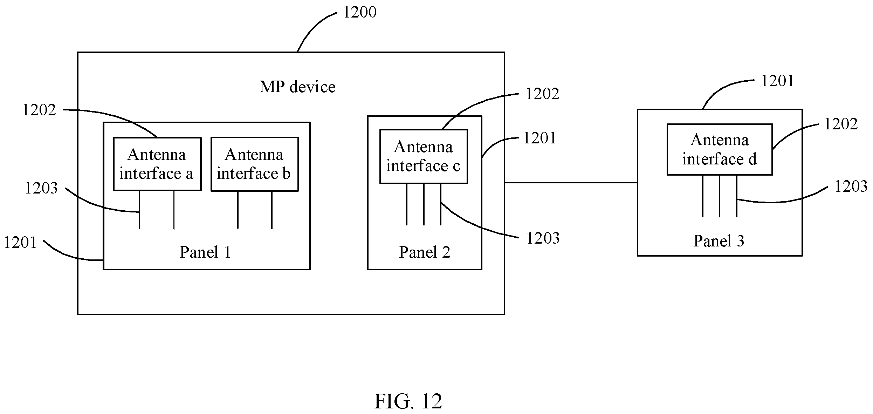

In an optional embodiment, the network device is a multi-panel (Multi-Panel, MP) device. FIG. 12 is a schematic diagram of a structure of an MP device according to an embodiment of this application. As shown in FIG. 12, the MP device includes multiple panels 1201 (for example, a panel 1 to a panel 3 in FIG. 12) and multiple antenna interfaces 1202 (for example, an antenna interface a to an antenna interface d in FIG. 12). One panel corresponds to at least one antenna interface (for example, in FIG. 12, the panel 1 corresponds to the antenna interface a and an antenna interface b, a panel 2 corresponds to an antenna interface c, and the panel 3 corresponds to the antenna interface d). One or more antennas 1203 are disposed on each panel, and the antenna 1203 disposed on each panel 1201 is connected to an antenna interface 1202 corresponding to the panel. One or more BSSs are virtualized from the antenna 1203 on each panel 1201. It can be learned that the antenna 1203 may be disposed on different panels 1201 because the multiple panels 1201 and the multiple antenna interfaces 1202 are provided, so that a remote antenna can be implemented. For example, in FIG. 12, the antenna interface d is far from the antenna interface a to the antenna interface c, the antenna 1203 may be disposed on the panel 3 corresponding to the antenna interface c, the panel 3 is also far from the panel 1 and the panel 2. In this case, an antenna disposed on the panel 3 and connected to the antenna interface d is a remote antenna.

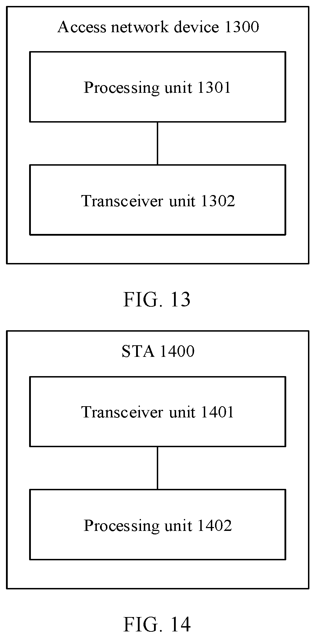

FIG. 13 is a schematic diagram of a module of a network device according to an embodiment of this application. The network device 1300 includes a processing unit 1301 and a transceiver unit 1302. The transceiver unit 1302 includes multiple antenna interfaces, and the network device 1300 includes multiple BSSs. At least two BSSs in the multiple BSSs correspond to different antenna interfaces.

The processing unit 1301 is configured to generate a correspondence information element, where the correspondence information element includes correspondence indication information, and the correspondence indication information is used to indicate correspondences between the BSSs and the antenna interfaces.

The transceiver unit 1302 is configured to send the correspondence information element to a station.

In this way, according to a technical solution of embodiments of this application, the network device sends the correspondence information element to the STA, and includes, in the correspondence information element, the correspondence indication information used to indicate the correspondences between the BSSs and the antenna interfaces. Therefore, the STA can obtain an antenna interface corresponding to each BSS based on the correspondences, and select, based on the antenna interface corresponding to each BSS, an AP included in one or more BSSs for association.

In addition, in this solution, the STA can clearly know, based on address information of a received signal, to communicate with which antenna interface. This helps the STA perform link adaptation. For example, when a physical layer protocol data unit (PHY Protocol Data Unit, PPDU) signal suddenly weakens because an antenna interface is switched, the STA can obtain, based on the PPDU signal, a BSS that sends the PPDU, and obtain, based on the correspondences, an antenna interface corresponding to the BSS that sends the PPDU signal. Therefore, it can be determined that the weakening of the signal is caused by switching of the antenna interface.

In some optional embodiments, the correspondence indication information includes quantity information and correspondence information, and the quantity information includes a quantity of the BSSs and/or a quantity of the antenna interfaces.

In some optional embodiments, the multiple antenna interfaces belong to at least two antenna interface groups, the correspondence information element further includes antenna interface grouping indication information, and the antenna interface grouping indication information is used to indicate an antenna interface included in each antenna interface group.

In some optional embodiments, the correspondence information element further includes BSS indication information, and the BSS indication information is used to indicate a BSS that sends the correspondence information element.

In some optional embodiments, different antenna interface groups correspond to different BSS colors. The transceiver unit 1302 is further configured to send a color indication information element to the station, where the color indication information element includes color indication information, and the color indication information is used to indicate a BSS color of a BSS of each antenna interface group.

In some optional embodiments, at least two BSSs in the multiple BSSs belong to one fast roaming group. The transceiver unit 1302 is further configured to send a fast roaming information element to the station, where the fast roaming information element includes fast roaming grouping indication information, and the fast roaming grouping indication information is used to indicate BSSs included in the fast roaming group.

In some optional embodiments, the fast roaming information element further includes a quantity of the fast roaming groups.

In some optional embodiments, in terms of the sending the correspondence information element to a station, the transceiver unit 1302 is specifically configured to send a management frame to the station, where the management frame includes the correspondence information element.

The network device may be a chip. The processing unit may be a processing circuit in the chip, and the transceiver unit may be a communication interface circuit in the chip. Optionally, the chip may further be coupled to a storage unit. When the chip reads instructions in the storage unit, the foregoing information transmission method may be implemented.

It should be noted that the description of the foregoing information transmission method is also applicable to the network device in this embodiment. To avoid redundancy, details are not described herein again.

FIG. 14 is a schematic diagram of a module of a STA according to an embodiment of this application. The STA 1400 includes:
a transceiver unit 1401, configured to receive a correspondence information element sent by a network device, where the network device includes multiple antenna interfaces, the network device includes multiple BSSs, at least two BSSs correspond to different antenna interfaces, the correspondence information element includes correspondence indication information, and the correspondence indication information is used to indicate correspondences between the BSSs and the antenna interfaces; and
a processing unit 1402, configured to parse the correspondence information element to obtain the correspondences.

In this way, according to a technical solution of embodiments of this application, the network device sends the correspondence information element to the STA, and includes, in the correspondence information element, the correspondence indication information used to indicate the correspondences between the BSSs and the antenna interfaces. Therefore, the STA can obtain an antenna interface corresponding to each BSS based on the correspondences, and select, based on the antenna interface corresponding to each BSS, an AP included in one or more BSSs for association.

In addition, in this solution, the STA can clearly know, based on address information of a received signal, to communicate with which antenna interface. This helps the STA perform link adaptation. For example, when a physical layer protocol data unit (PHY Protocol Data Unit, PPDU) signal suddenly weakens because an antenna interface is switched, the STA can obtain, based on the PPDU signal, a BSS that sends the PPDU, and obtain, based on the correspondences, an antenna interface corresponding to the BSS that sends the PPDU signal. Therefore, it can be determined that the weakening of the signal is caused by switching of the antenna interface.

In some optional embodiments, the correspondence indication information includes quantity information and correspondence information, and the quantity information includes a quantity of the BSSs and/or a quantity of the antenna interfaces.

In some optional embodiments, the multiple antenna interfaces belong to at least two antenna interface groups, the correspondence information element further includes antenna interface grouping indication information, and the antenna interface grouping indication information is used to indicate an antenna interface included in each antenna interface group.

In some optional embodiments, the correspondence information element further includes BSS indication information, and the BSS indication information is used to indicate a BSS that sends the correspondence information element.

In some optional embodiments, different antenna interface groups correspond to different BSS colors.

The transceiver unit is further configured to receive a color indication information element sent by the network device, where the color indication information element includes color indication information, and the color indication information is used to indicate a BSS color of a BSS of each antenna interface group.

In some optional embodiments, at least two BSSs in the multiple BSSs belong to one fast roaming group.

The transceiver unit is further configured to receive a fast roaming information element sent by the network device, where the fast roaming information element includes fast roaming grouping indication information, and the fast roaming grouping indication information is used to indicate BSSs included in the fast roaming group.

In some optional embodiments, the fast roaming information element further includes a quantity of the fast roaming groups.

In some optional embodiments, in terms of the receiving a correspondence information element sent by a network device, the transceiver unit 1401 is specifically configured to receive a management frame sent by the network device, where the management frame includes the correspondence information element.

The station may be a chip. The processing unit may be a processing circuit in the chip, and the transceiver unit may be a communication interface circuit in the chip. Optionally, the chip may further be coupled to a storage unit. When the chip reads instructions in the storage unit, the foregoing information transmission method may be implemented. It should be noted that the description of the foregoing information transmission method is also applicable to the station in this embodiment. To avoid redundancy, details are not described herein again.

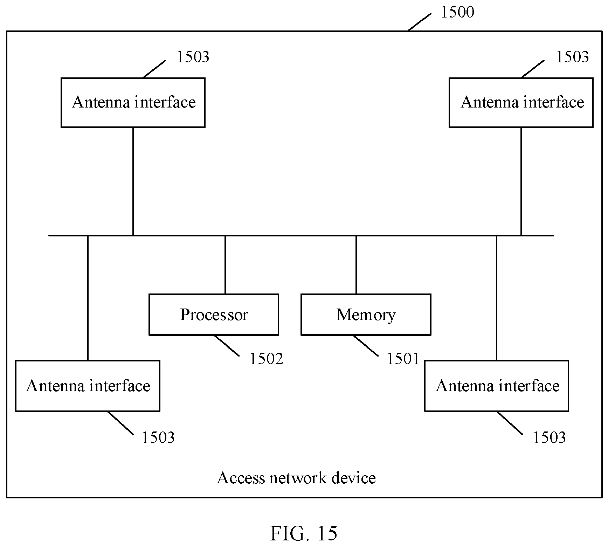

FIG. 15 is a schematic diagram of a structure of a network device according to an embodiment of this application. The network device 1500 includes a memory 1501, one processor 1502, and multiple antenna interfaces 1503. The network device 1500 includes multiple BSSs, and at least two BSSs in the multiple BSSs correspond to different antenna interfaces. The memory 1501 is configured to store related instructions and data, and may transmit the stored data to the processor 1502.

The processor 1502 is configured to read the related instructions in the memory 1501 to perform the following operations:
generating a correspondence information element, where the correspondence information element includes correspondence indication information, and the correspondence indication information is used to indicate correspondences between the BSSs and the antenna interfaces; and
sending the correspondence information element to the STA by using at least one antenna interface 1503. It should be understood that, the processor mentioned in embodiments of this application may be a central processing unit (Central Processing Unit, CPU), the processor may further be another general-purpose processor, a digital signal processor (Digital Signal Processor, DSP), an application-specific integrated circuit (Application-Specific Integrated Circuit, ASIC), a field programmable gate array (Field Programmable Gate Array, FPGA), or another programmable logic device, discrete gate or transistor logic device, discrete hardware component, or the like. The general-purpose processor may be a microprocessor, or the processor may be any conventional processor or the like.

The memory 1501 stores computer instructions and data. The memory 1501 may store computer instructions and data that are required for implementing the cluster access method provided in this application. For example, the memory 1501 stores instructions used to implement steps of the cluster access method. The memory 1501 may be any one or any combination of the following storage media: a nonvolatile memory (such as a read-only memory (ROM), a solid-state drive (SSD), a hard disk drive (HDD), or an optical disc) and a volatile memory.

Specifically, the processor 1502 of the network device 1500 may be the processing unit 1301 of the network device 1300 in the embodiment shown in FIG. 13, and the antenna interface of the network device 1500 may be the transceiver unit 1302 of the network device in the embodiment shown in FIG. 13.

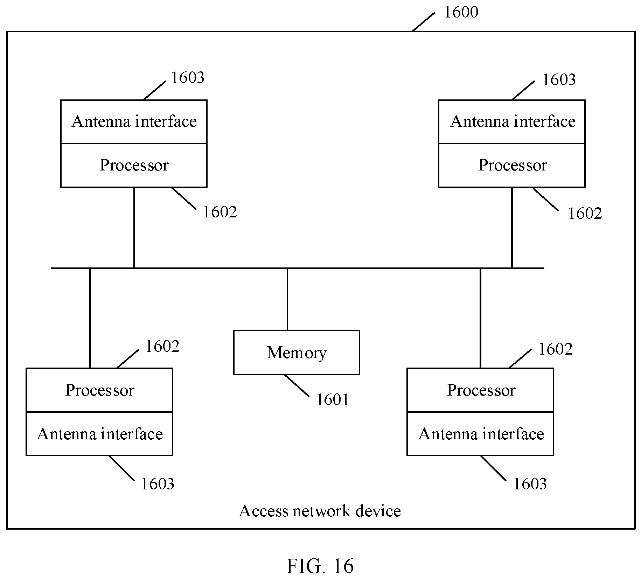

FIG. 16 is a schematic diagram of another structure of a network device according to an embodiment of this application. The network device 1600 includes a memory 1601, multiple processors 1602, and multiple antenna interfaces 1603. Each processor 1602 corresponds to one or more antenna interfaces 1603 (FIG. 16 shows only a case in which the processor corresponds to one antenna interface). The network device 1600 includes multiple BSSs, and at least two BSSs in the multiple BSSs correspond to different antenna interfaces. The memory 1601 is configured to store related instructions and data, and may transmit the stored data to the processor 1602.

At least one processor 1602 in the multiple processors 1602 is configured to read the related instructions in the memory 1601 to perform the following operations:
generating a correspondence information element, where the correspondence information element includes correspondence indication information, and the correspondence indication information is used to indicate correspondences between the BSSs and the antenna interfaces; and
sending the correspondence information element to the STA by using an antenna interface corresponding to the at least one processor 1603.

It should be understood that, the processor mentioned in embodiments of this application may be a central processing unit (Central Processing Unit, CPU), the processor may further be another general-purpose processor, a digital signal processor (Digital Signal Processor, DSP), an application-specific integrated circuit (Application-Specific Integrated Circuit, ASIC), a field programmable gate array (Field Programmable Gate Array, FPGA), or another programmable logic device, discrete gate or transistor logic device, discrete hardware component, or the like. The general-purpose processor may be a microprocessor, or the processor may be any conventional processor or the like.

The memory 1601 stores computer instructions and data. The memory 1601 may store computer instructions and data that are required for implementing the cluster access method provided in this application. For example, the memory 1601 stores instructions used to implement steps of the cluster access method. The memory 1601 may be any one or any combination of the following storage media: a nonvolatile memory (such as a read-only memory (ROM), a solid-state drive (SSD), a hard disk drive (HDD), or an optical disc) and a volatile memory.

It should be noted that the memory described in this specification aims to include but is not limited to these memories and any memory of another appropriate type.

It should be noted that FIG. 16 shows only a case in which the processor corresponds to one antenna interface. In another case, in a network device, one processor may alternatively correspond to multiple antenna interfaces. For example, multiple processors included in a network device include at least one first processor and at least one second processor. One first processor corresponds to one antenna interface, and one second processor corresponds to multiple antenna interfaces. For another example, a network device includes multiple processors, and each processor of the multiple processors corresponds to multiple antenna interfaces.

Specifically, the processor 1602 of the network device 1600 may be the processing unit 1301 of the network device 1300 in the embodiment shown in FIG. 13, and the antenna interface of the network device 1600 may be the transceiver unit 1302 of the network device in the embodiment shown in FIG. 13.

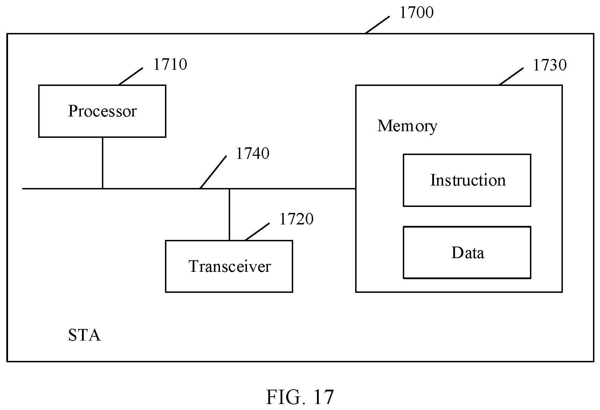

FIG. 17 schematically provides a possible basic hardware architecture of a STA according to this application.

The STA 1700 includes at least a processor 1710, a transceiver 1720, and a memory 1730. The processor 1710, the transceiver 1720, and the memory 1730 are connected to each other through a bus 1740.

The processor 1710 may be a central processing unit (central processing unit, CPU), or a combination of a CPU and a hardware chip. The hardware chip may be an application-specific integrated circuit (application-specific integrated circuit, ASIC), a programmable logic device (programmable logic device, PLD), or a combination thereof. The PLD may be a complex programmable logic device (complex programmable logic device, CPLD), a field-programmable gate array (field-programmable gate array, FPGA), generic array logic (generic array logic, GAL), or any combination thereof.

The transceiver 1720 may include a receiver and a transmitter, for example, a radio frequency module. That the processor 1710 receives or sends a message described below may be specifically understood as that the processor 1710 receives or sends the message by using the transceiver.

The memory 1730 includes but is not limited to a random access memory (Random Access Memory, RAM), a read-only memory (Read-Only Memory, ROM), or an erasable programmable read-only memory (Erasable Programmable Read-Only Memory, EPROM, or flash memory). The memory 1730 is configured to store related instructions and data, and may transmit the stored data to the processor 1710.

The processor 1710 in the STA 1700 is configured to read the related instructions in the memory 1730 to perform the following operations:
receiving, by using the transceiver 1720, a correspondence information element sent by a network device, where the network device includes multiple antenna interfaces, the network device includes multiple BSSs, at least two BSSs correspond to different antenna interfaces, the correspondence information element includes correspondence indication information, and the correspondence indication information is used to indicate correspondences between the BSSs and the antenna interfaces; and
parsing the correspondence information element to obtain the correspondences.

Specifically, the processor 1710 in the STA 1700 in this embodiment may be the processing unit 1402 of the STA 1400 in the embodiment corresponding to FIG. 14, and the transceiver 1720 in the STA 1700 in this embodiment may be the transceiver unit 1401 of the STA 1400 corresponding to FIG. 14.

This application provides a computer readable-storage medium. The computer-readable storage medium stores computer instructions, and the computer instructions instruct a server to perform the information transmission method provided in any one of the foregoing implementations.

It should be further understood that "first", "second", "third", "fourth", and various numbers in this specification are merely used for differentiation for ease of description, and are not construed as a limitation to the scope of this application.

It should be understood that the term "and/or" in this specification describes only an association relationship for describing associated objects and represents that three relationships may exist. For example, A and/or B may represent the following three cases: Only A exists, both A and B exist, and only B exists. In addition, the character "/" in this specification generally indicates an "or" relationship between the associated objects.

It should be understood that sequence numbers of the foregoing processes do not mean execution sequences in embodiments of this application. The execution sequences of the processes should be determined based on functions and internal logic of the processes, and should not constitute any limitation on implementation processes of embodiments of this application.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

A person skilled in the art may clearly understand that, for the purpose of convenient and brief description, for a detailed working process of the foregoing system, apparatus, and unit, reference may be made to a corresponding process in the foregoing method embodiments. Details are not described herein again.

In the several embodiments provided in this application, it should be understood that the disclosed system, apparatus, and method may be implemented in other manners. For example, the foregoing apparatus embodiments are merely examples. For example, division into the units is merely logical function division and may be other division during actual implementation. For example, multiple units or components may be combined or integrated into another system, or some features may be ignored or not performed. In addition, the displayed or discussed mutual coupling or direct coupling or communication connections may be implemented through some interfaces. The indirect coupling or communication connections between the apparatuses or units may be implemented in electronic, mechanical, or other forms.

The units described as separate parts may or may not be physically separate, and parts displayed as units may or may not be physical units, and may be located in one position, or may be distributed on multiple network units. Some or all of the units may be selected depending on actual requirements to achieve the objectives of the solutions in embodiments.

In addition, the functional units in embodiments of this application may be integrated into one processing unit, or each of the units may exist alone physically, or two or more units may be integrated into one unit.

When the functions are implemented in a form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, or a network device) to perform all or some of the steps of the methods described in embodiments of this application. The foregoing storage medium includes: any medium that can store program code, such as a USB flash drive, a removable hard disk, a read-only memory (Read-Only Memory, ROM), a random access memory (Random Access Memory, RAM), a magnetic disk, or an optical disc.

A sequence of the steps of the method in embodiments of this application may be adjusted, combined, and deleted based on an actual requirement.

The modules in the apparatus in embodiments of this application may be combined, divided, and deleted based on an actual requirement.

The foregoing embodiments are merely intended to describe the technical solutions of this application, but are not to limit this application.
actual requirement.

The foregoing embodiments are merely intended to describe the technical solutions of this application, but are not to limit this application. Although this application is described in detail with reference to the foregoing embodiments, a person of ordinary skill in the art should understand that they may still make modifications to the technical solutions recorded in the foregoing embodiments without departing from the scope of the technical solutions of embodiments of this application.

## Claims

1. A network device (10, 1300, 1500, 1600) that supports a WLAN communication function, wherein the network device (10, 1300, 1500, 1600) comprises a processing unit (1301, 1502, 1602) and a transceiver unit (1302), wherein the transceiver unit (1302) comprises multiple antenna interfaces (11, 1503, 1603), and the network device (10, 1300, 1500, 1600) is configured to operate with multiple basic service sets, wherein at least two basic service sets correspond to different antenna interfaces (11, 1503, 1603),
the processing unit (1301, 1502, 1602) is configured to generate a correspondence information element, wherein the correspondence information element comprises correspondence indication information, and the correspondence indication information is used to indicate correspondences between the basic service sets and the antenna interfaces (11, 1503, 1603); and
the transceiver unit (1302) is configured to send the correspondence information element to a station (20, 1400, 1700) that supports the WLAN communication function,
wherein at least two basic service sets in the multiple basic service sets belong to one fast roaming group, and the transceiver unit (1302) is further configured to send a fast roaming information element to the station, wherein the fast roaming information element comprises fast roaming grouping indication information, and the fast roaming grouping indication information is used to indicate basic service sets comprised in the fast roaming group, so that when the station (20, 1400, 1700) switches association in multiple basic service sets in a same fast roaming group, the station (20, 1400, 1700) does not need to disassociate with a basic service set before switching, and does not need to authenticate a basic service set after switching, but the station (20, 1400, 1700) directly switches to and associates with one basic service set in the fast roaming group to another basic service set in the fast roaming group, to implement fast roaming, and
wherein the fast roaming information element and the correspondence indication information are carried in a same management frame for sending.

2. The network device (10, 1300, 1500, 1600) according to claim 1, wherein the correspondence indication information comprises quantity information and correspondence information, and the quantity information comprises a quantity of the basic service sets and/or a quantity of the antenna interfaces (11, 1503, 1603).

3. The network device (10, 1300, 1500, 1600) according to claim 1 or 2, wherein the multiple antenna interfaces (11, 1503, 1603) belong to at least two antenna interface groups, the correspondence information element further comprises antenna interface grouping indication information, and the antenna interface grouping indication information is used to indicate an antenna interface (11, 1503, 1603) comprised in each antenna interface group.

4. The network device (10, 1300, 1500, 1600) according to any one of claims 1 to 3, wherein the correspondence information element further comprises basic service set indication information, and the basic service set indication information is used to indicate a basic service set that sends the correspondence information element.

5. The network device (10, 1300, 1500, 1600) according to claim 3, wherein different antenna interface groups correspond to different basic service set colors, and
the transceiver unit (1302) is further configured to send a color indication information element to the station (20, 1400, 1700), wherein the color indication information element comprises color indication information, and the color indication information is used to indicate a basic service set color of a basic service set of each antenna interface group.

6. The network device (10, 1300, 1500, 1600) according to any one of claims 1 to 5, wherein the fast roaming information element further comprises a quantity of the fast roaming groups.

7. The network device (10, 1300, 1500, 1600) according to any one of claims 1 to 6, wherein in terms of the sending the correspondence information element to the station (20, 1400, 1700), the transceiver unit (1302) is specifically configured to send a management frame to the station (20, 1400, 1700), wherein the management frame comprises the correspondence information element.

8. A station (20, 1400, 1700) that supports a WLAN communication function, comprising:
a transceiver unit (1401, 1720), configured to receive a correspondence information element sent by a network device (10, 1300, 1500, 1600) that supports the WLAN communication function, wherein the network device (10, 1300, 1500, 1600) comprises multiple antenna interfaces (11, 1503, 1603), the network device (10, 1300, 1500, 1600) is configured to operate with multiple basic service sets, at least two basic service sets correspond to different antenna interfaces (11, 1503, 1603), the correspondence information element comprises correspondence indication information, and the correspondence indication information is used to indicate correspondences between the basic service sets and the antenna interfaces (11, 1503, 1603); and
a processing unit (1402, 1710), configured to parse the correspondence information element to obtain the correspondences,
wherein at least two basic service sets in the multiple basic service sets belong to one fast roaming group, and
the transceiver unit (1401, 1720) is further configured to receive a fast roaming information element sent by the network device (10, 1300, 1500, 1600), wherein the fast roaming information element comprises fast roaming grouping indication information, and the fast roaming grouping indication information is used to indicate basic service sets comprised in the fast roaming group, so that when the station (20, 1400, 1700) switches association in multiple basic service sets in a same fast roaming group, the station (20, 1400, 1700) does not need to disassociate with a basic service set before switching, and does not need to authenticate a basic service set after switching, but the station (20, 1400, 1700) directly switches to and associates with one basic service set in the fast roaming group to another basic service set in the fast roaming group, to implement fast roaming,
wherein the fast roaming information element and the correspondence indication information are carried in a same management frame for sending.

9. The station (20, 1400, 1700) according to claim 8, wherein the correspondence indication information comprises quantity information and correspondence information, and the quantity information comprises a quantity of the basic service sets and/or a quantity of the antenna interfaces (11, 1503, 1603).

10. The station (20, 1400, 1700) according to claim 8 or 9, wherein the multiple antenna interfaces (11, 1503, 1603) belong to at least two antenna interface groups, the correspondence information element further comprises antenna interface grouping indication information, and the antenna interface grouping indication information is used to indicate an antenna interface (11, 1503, 1603) comprised in each antenna interface group.

11. The station (20, 1400, 1700) according to any one of claims 8 to 10, wherein the correspondence information element further comprises basic service set indication information, and the basic service set indication information is used to indicate a basic service set that sends the correspondence information element.

12. The station (20, 1400, 1700) according to claim 10, wherein different antenna interface groups correspond to different basic service set colors, and
the transceiver unit (1401, 1720) is further configured to receive a color indication information element sent by the network device (10, 1300, 1500, 1600), wherein the color indication information element comprises color indication information, and the color indication information is used to indicate a basic service set color of a basic service set of each antenna interface group.

13. The station (20, 1400, 1700) according to any one of claims 8 to 12, wherein the fast roaming information element further comprises a quantity of the fast roaming groups.

## Patentansprüche

1. Netzwerkvorrichtung (10, 1300, 1500, 1600), die eine WLAN-Kommunikationsfunktion unterstützt, wobei die Netzwerkvorrichtung (10, 1300, 1500, 1600) eine Verarbeitungseinheit (1301, 1502, 1602) und eine Sende-Empfangseinheit (1302) umfasst, wobei die Sende-Empfangseinheit (1302) mehrere Antennenschnittstellen (11, 1503, 1603) umfasst und die Netzwerkvorrichtung (10, 1300, 1500, 1600) dazu konfiguriert ist, mit mehreren Basisdienstsätzen zu arbeiten, wobei mindestens zwei Basisdienstsätze unterschiedlichen Antennenschnittstellen (11, 1503, 1603) entsprechen;
die Verarbeitungseinheit (1301, 1502, 1602) dazu konfiguriert ist, ein Korrespondenzinformationselement zu generieren, wobei das Korrespondenzinformationselement Korrespondenzanzeigeinformationen umfasst, und die Korrespondenzanzeigeinformationen verwendet werden, um Korrespondenzen zwischen den Basisdienstsätzen und den Antennenschnittstellen (11, 1503, 1603) anzuzeigen; und
die Sende-Empfangseinheit (1302) dazu konfiguriert ist, das Korrespondenzinformationselement an eine Station (20, 1400, 1700) zu senden, welche die WLAN-Kommunikationsfunktion unterstützt,
wobei mindestens zwei Basisdienstsätze in den mehreren Basisdienstsätzen zu einer Fast-Roaming-Gruppe gehören, und die Sende-Empfangseinheit (1302) ferner dazu konfiguriert ist, ein Fast-Roaming-Informationselement an die Station zu senden, wobei das Fast-Roaming-Informationselement Fast-Roaming-Gruppierungsanzeigeinformationen umfasst und die Fast-Roaming-Gruppierungsanzeigeinformationen verwendet werden, um in der Fast-Roaming-Gruppe enthaltene Basisdienstsätze anzuzeigen, sodass, wenn die Station (20, 1400, 1700) die Zuordnung in mehreren Basisdienstsätzen in derselben Fast-Roaming-Gruppe wechselt, die Station (20, 1400, 1700) die Zuordnung zu einem Basisdienstsatz vor dem Wechsel nicht aufheben muss und einen Basisdienstsatz nach dem Wechsel nicht authentifizieren muss, sondern die Station (20, 1400, 1700) direkt zu einem Basisdienstsatz in der Fast-Roaming-Gruppe wechselt und sich mit diesem zu einem anderen Basisdienstsatz in der Fast-Roaming-Gruppe verbindet, um Fast-Roaming zu implementieren, und
wobei das Fast-Roaming-Informationselement und die Korrespondenzanzeigeinformationen zum Senden in demselben Verwaltungsrahmen übertragen werden.

2. Netzwerkvorrichtung (10, 1300, 1500, 1600) nach Anspruch 1, wobei die Korrespondenzanzeigeinformationen Mengeninformationen und Korrespondenzinformationen umfassen, und die Mengeninformationen eine Menge der Basisdienstsätze und/oder eine Menge der Antennenschnittstellen (11, 1503, 1603) umfassen.

3. Netzwerkvorrichtung (10, 1300, 1500, 1600) nach Anspruch 1 oder 2, wobei die mehreren Antennenschnittstellen (11, 1503, 1603) zu mindestens zwei Antennenschnittstellengruppen gehören, das Korrespondenzinformationselement ferner Gruppierungsanzeigeinformationen von Antennenschnittstellen umfasst und die Gruppierungsanzeigeinformationen von Antennenschnittstellen verwendet werden, um eine Antennenschnittstelle (11, 1503, 1603) anzuzeigen, die in jeder Antennenschnittstellengruppe enthalten ist.

4. Netzwerkvorrichtung (10, 1300, 1500, 1600) nach einem der Ansprüche 1 bis 3, wobei das Korrespondenzinformationselement ferner Anzeigeinformationen von Basisdienstsätzen umfasst und die Anzeigeinformationen von Basisdienstsätzen verwendet werden, um einen Basisdienstsatz anzuzeigen, der das Korrespondenzinformationselement sendet.

5. Netzwerkvorrichtung (10, 1300, 1500, 1600) nach Anspruch 3, wobei unterschiedliche Antennenschnittstellengruppen unterschiedlichen Farben des Basisdienstsatzes entsprechen, und die Sende-Empfangseinheit (1302) ferner dazu konfiguriert ist, ein Farbanzeige-Informationselement an die Station (20, 1400, 1700) zu senden, wobei das Farbanzeige-Informationselement Farbanzeigeinformationen umfasst, und die Farbanzeigeinformationen verwendet werden, um eine Farbe des Basisdienstsatzes eines Basisdienstsatzes jeder Antennenschnittstellengruppe anzuzeigen.

6. Netzwerkvorrichtung (10, 1300, 1500, 1600) nach einem der Ansprüche 1 bis 5, wobei das Fast-Roaming-Informationselement ferner eine Menge der Fast-Roaming-Gruppen umfasst.

7. Netzwerkvorrichtung (10, 1300, 1500, 1600) nach einem der Ansprüche 1 bis 6, wobei die Sende-Empfangseinheit (1302) im Hinblick auf das Senden des Korrespondenzinformationselements an die Station (20, 1400, 1700) speziell dazu konfiguriert ist, einen Verwaltungsrahmen an die Station (20, 1400, 1700) zu senden, wobei der Verwaltungsrahmen das Korrespondenzinformationselement umfasst.

8. Station (20, 1400, 1700), die eine WLAN-Kommunikationsfunktion unterstützt, umfassend:
eine Sende-Empfangseinheit (1401, 1720), die dazu konfiguriert ist, ein Korrespondenzinformationselement zu empfangen, das durch eine Netzwerkvorrichtung (10, 1300, 1500, 1600) gesendet wird, welche die WLAN-Kommunikationsfunktion unterstützt, wobei die Netzwerkvorrichtung (10, 1300, 1500, 1600) mehrere Antennenschnittstellen (11, 1503, 1603) umfasst, die Netzwerkvorrichtung (10, 1300, 1500, 1600) dazu konfiguriert ist, mit mehreren Basisdienstsätzen zu arbeiten, mindestens zwei Basisdienstsätze unterschiedlichen Antennenschnittstellen (11, 1503, 1603) entsprechen, das Korrespondenzinformationselement Korrespondenzanzeigeinformationen umfasst und die Korrespondenzanzeigeinformationen verwendet werden, um Korrespondenzen zwischen den Basisdienstsätzen und den Antennenschnittstellen (11, 1503, 1603) anzuzeigen; und
eine Verarbeitungseinheit (1402, 1710), die dazu konfiguriert ist, das Korrespondenzinformationselement zu parsen, um die Korrespondenzen zu erlangen,
wobei mindestens zwei Basisdienstsätze in den mehreren Basisdienstsätzen zu einer Fast-Roaming-Gruppe gehören, und
die Sende-Empfangseinheit (1401, 1720) ferner dazu konfiguriert ist, ein Fast-Roaming-Informationselement zu empfangen, das durch die Netzwerkvorrichtung (10, 1300, 1500, 1600) gesendet wird, wobei das Fast-Roaming-Informationselement Fast-Roaming-Gruppierungsanzeigeinformationen umfasst und die Fast-Roaming-Gruppierungsanzeigeinformationen verwendet werden, um in der Fast-Roaming-Gruppe enthaltene Basisdienstsätze anzuzeigen, sodass, wenn die Station (20, 1400, 1700) die Zuordnung in mehreren Basisdienstsätzen in derselben Fast-Roaming-Gruppe wechselt, die Station (20, 1400, 1700) die Zuordnung zu einem Basisdienstsatz vor dem Wechsel nicht aufheben muss und einen Basisdienstsatz nach dem Wechsel nicht authentifizieren muss, sondern die Station (20, 1400, 1700) direkt zu einem Basisdienstsatz in der Fast-Roaming-Gruppe wechselt und sich mit diesem zu einem anderen Basisdienstsatz in der Fast-Roaming-Gruppe verbindet, um Fast-Roaming zu implementieren,
wobei das Fast-Roaming-Informationselement und die Korrespondenzanzeigeinformationen zum Senden in demselben Verwaltungsrahmen übertragen werden.

9. Station (20, 1400, 1700) nach Anspruch 8, wobei die Korrespondenzanzeigeinformationen Mengeninformationen und Korrespondenzinformationen umfassen und die Mengeninformationen eine Menge der Basisdienstsätze und/oder eine Menge der Antennenschnittstellen (11, 1503, 1603) umfassen.

10. Station (20, 1400, 1700) nach Anspruch 8 oder 9, wobei die mehreren Antennenschnittstellen (11, 1503, 1603) zu mindestens zwei Antennenschnittstellengruppen gehören, das Korrespondenzinformationselement ferner Gruppierungsanzeigeinformationen von Antennenschnittstellen umfasst und die Gruppierungsanzeigeinformationen von Antennenschnittstellen verwendet werden, um eine Antennenschnittstelle (11, 1503, 1603) anzuzeigen, die in jeder Antennenschnittstellengruppe enthalten ist.

11. Station (20, 1400, 1700) nach einem der Ansprüche 8 bis 10, wobei das Korrespondenzinformationselement ferner Anzeigeinformationen von Basisdienstsätzen umfasst und die Anzeigeinformationen von Basisdienstsätzen verwendet werden, um einen Basisdienstsatz anzuzeigen, der das Korrespondenzinformationselement sendet.

12. Station (20, 1400, 1700) nach Anspruch 10, wobei unterschiedliche Antennenschnittstellengruppen unterschiedlichen Farben des Basisdienstsatzes entsprechen, und die Sende-Empfangseinheit (1401, 1720) ferner dazu konfiguriert ist, ein Farbanzeige-Informationselement zu empfangen, das durch die Netzwerkvorrichtung (10, 1300, 1500, 1600) gesendet wird, wobei das Farbanzeige-Informationselement Farbanzeigeinformationen umfasst, und die Farbanzeigeinformationen verwendet werden, um eine Basisdienstsatzfarbe eines Basisdienstsatzes jeder Antennenschnittstellengruppe anzuzeigen.

13. Station (20, 1400, 1700) nach einem der Ansprüche 8 bis 12, wobei das Fast-Roaming-Informationselement ferner eine Menge der Fast-Roaming-Gruppen umfasst.

## Revendications

1. Dispositif réseau (10, 1300, 1500, 1600) qui prend en charge une fonction de communication WLAN, dans lequel le dispositif réseau (10, 1300, 1500, 1600) comprend une unité de traitement (1301, 1502, 1602) et une unité d'émetteur-récepteur (1302), dans lequel l'unité d'émetteur-récepteur (1302) comprend plusieurs interfaces d'antenne (11, 1503, 1603), et le dispositif réseau (10, 1300, 1500, 1600) est configuré pour fonctionner avec plusieurs ensembles de services de base, dans lequel au moins deux ensembles de services de base correspondent à différentes interfaces d'antenne (11, 1503, 1603) ;
l'unité de traitement (1301, 1502, 1602) est configurée pour générer un élément d'informations de correspondance, dans lequel l'élément d'informations de correspondance comprend des informations d'indication de correspondance, et les informations d'indication de correspondance sont utilisées pour indiquer des correspondances entre les ensembles de services de base et les interfaces d'antenne (11, 1503, 1603) ; et
l'unité d'émetteur-récepteur (1302) est configurée pour envoyer l'élément d'informations de correspondance à une station (20, 1400, 1700) qui prend en charge la fonction de communication WLAN,
dans lequel au moins deux ensembles de services de base parmi les plusieurs ensembles de services de base appartiennent à un groupe d'itinérance rapide, et
l'unité d'émetteur-récepteur (1302) est également configurée pour envoyer un élément d'informations d'itinérance rapide à la station, dans lequel l'élément d'informations d'itinérance rapide comprend des informations d'indication de groupement d'itinérance rapide, et les informations d'indication de groupement d'itinérance rapide sont utilisées pour indiquer des ensembles de services de base compris dans le groupe d'itinérance rapide, de sorte que lorsque la station (20, 1400, 1700) commute l'association dans plusieurs ensembles de services de base dans un même groupe d'itinérance rapide, la station (20, 1400, 1700) n'a pas besoin de se dissocier d'un ensemble de services de base avant la commutation, et n'a pas besoin d'authentifier un ensemble de services de base après la commutation, mais la station (20, 1400, 1700) commute directement vers un ensemble de services de base dans le groupe d'itinérance rapide et s'associe à un autre ensemble de services de base dans le groupe d'itinérance rapide, pour mettre en œuvre l'itinérance rapide, et
dans lequel l'élément d'informations d'itinérance rapide et les informations d'indication de correspondance sont transportés dans une même trame de gestion pour l'envoi.

2. Dispositif réseau (10, 1300, 1500, 1600) selon la revendication 1, dans lequel les informations d'indication de correspondance comprennent des informations de quantité et des informations de correspondance, et les informations de quantité comprennent une quantité des ensembles de services de base et/ou une quantité des interfaces d'antenne (11, 1503, 1603).

3. Dispositif réseau (10, 1300, 1500, 1600) selon la revendication 1 ou 2, dans lequel les multiples interfaces d'antenne (11, 1503, 1603) appartiennent à au moins deux groupes d'interfaces d'antenne, l'élément d'informations de correspondance comprend également des informations d'indication de groupement d'interfaces d'antenne, et les informations d'indication de groupement d'interfaces d'antenne sont utilisées pour indiquer une interface d'antenne (11, 1503, 1603) comprise dans chaque groupe d'interfaces d'antenne.

4. Dispositif réseau (10, 1300, 1500, 1600) selon l'une quelconque des revendications 1 à 3, dans lequel l'élément d'informations de correspondance comprend également des informations d'indication d'ensemble de services de base, et les informations d'indication d'ensemble de services de base sont utilisées pour indiquer un ensemble de services de base qui envoie l'élément d'informations de correspondance.

5. Dispositif réseau (10, 1300, 1500, 1600) selon la revendication 3, dans lequel différents groupes d'interfaces d'antenne correspondent à différentes couleurs d'ensemble de services de base, et
l'unité d'émetteur-récepteur (1302) est également configurée pour envoyer un élément d'informations d'indication de couleur à la station (20, 1400, 1700), dans lequel l'élément d'informations d'indication de couleur comprend des informations d'indication de couleur, et les informations d'indication de couleur sont utilisées pour indiquer une couleur d'ensemble de services de base d'un ensemble de services de base de chaque groupe d'interfaces d'antenne.

6. Dispositif réseau (10, 1300, 1500, 1600) selon l'une quelconque des revendications 1 à 5, dans lequel l'élément d'informations d'itinérance rapide comprend également une quantité de groupes d'itinérance rapide.

7. Dispositif réseau (10, 1300, 1500, 1600) selon l'une quelconque des revendications 1 à 6, dans lequel en termes d'envoi de l'élément d'informations de correspondance à la station (20, 1400, 1700), l'unité d'émetteur-récepteur (1302) est spécifiquement configurée pour envoyer une trame de gestion à la station (20, 1400, 1700), dans lequel la trame de gestion comprend l'élément d'informations de correspondance.

8. Station (20, 1400, 1700) qui prend en charge une fonction de communication WLAN, comprenant :
une unité d'émetteur-récepteur (1401, 1720), configurée pour recevoir un élément d'informations de correspondance envoyé par un dispositif réseau (10, 1300, 1500, 1600) qui prend en charge la fonction de communication WLAN, dans laquelle le dispositif réseau (10, 1300, 1500, 1600) comprend de multiples interfaces d'antenne (11, 1503, 1603), le dispositif réseau (10, 1300, 1500, 1600) est configuré pour fonctionner avec plusieurs ensembles de services de base, au moins deux ensembles de services de base correspondent à différentes interfaces d'antenne (11, 1503, 1603), l'élément d'informations de correspondance comprend des informations d'indication de correspondance, et les informations d'indication de correspondance sont utilisées pour indiquer des correspondances entre les ensembles de services de base et les interfaces d'antenne (11, 1503, 1603) ; et
une unité de traitement (1402, 1710), configurée pour analyser l'élément d'information de correspondance afin d'obtenir les correspondances,
dans laquelle au moins deux ensembles de services de base parmi les plusieurs ensembles de services de base appartiennent à un groupe d'itinérance rapide, et
l'unité d'émetteur-récepteur (1401, 1720) est également configurée pour recevoir un élément d'informations d'itinérance rapide envoyé par le dispositif réseau (10, 1300, 1500, 1600) dans laquelle l'élément d'informations d'itinérance rapide comprend des informations d'indication de groupement d'itinérance rapide, et les informations d'indication de groupement d'itinérance rapide sont utilisées pour indiquer des ensembles de services de base compris dans le groupe d'itinérance rapide, de sorte que lorsque la station (20, 1400, 1700) commute l'association dans plusieurs ensembles de services de base dans un même groupe d'itinérance rapide, la station (20, 1400, 1700) n'a pas besoin de se dissocier d'un ensemble de services de base avant la commutation, et n'a pas besoin d'authentifier un ensemble de services de base après la commutation, mais la station (20, 1400, 1700) commute directement vers un ensemble de services de base dans le groupe d'itinérance rapide et s'associe à un autre ensemble de services de base dans le groupe d'itinérance rapide, pour mettre en œuvre l'itinérance rapide,
dans laquelle l'élément d'information d'itinérance rapide et les informations d'indication de correspondance sont transportés dans une même trame de gestion pour l'envoi.

9. Station (20, 1400, 1700) selon la revendication 8, dans laquelle les informations d'indication de correspondance comprennent des informations de quantité et des informations de correspondance, et les informations de quantité comprennent une quantité des ensembles de services de base et/ou une quantité des interfaces d'antenne (11, 1503, 1603).

10. Station (20, 1400, 1700) selon la revendication 8 ou 9, dans laquelle les multiples interfaces d'antenne (11, 1503, 1603) appartiennent à au moins deux groupes d'interfaces d'antenne, l'élément d'informations de correspondance comprend également des informations d'indication de groupement d'interfaces d'antenne, et les informations d'indication de groupement d'interfaces d'antenne sont utilisées pour indiquer une interface d'antenne (11, 1503, 1603) comprise dans chaque groupe d'interfaces d'antenne.

11. Station (20, 1400, 1700) selon l'une quelconque des revendications 8 à 10, dans laquelle l'élément d'informations de correspondance comprend également des informations d'indication d'ensemble de services de base, et les informations d'indication d'ensemble de services de base sont utilisées pour indiquer un ensemble de services de base qui envoie l'élément d'informations de correspondance.

12. Station (20, 1400, 1700) selon la revendication 10, dans laquelle différents groupes d'interfaces d'antenne correspondent à différentes couleurs d'ensemble de services de base, et
l'unité d'émetteur-récepteur (1401, 1720) est également configurée pour recevoir un élément d'informations d'indication de couleur envoyé pour le dispositif réseau (10, 1300, 1500, 1600), dans laquelle l'élément d'informations d'indication de couleur comprend des informations d'indication de couleur, et les informations d'indication de couleur sont utilisées pour indiquer une couleur d'ensemble de services de base d'un ensemble de services de base de chaque groupe d'interfaces d'antenne.

13. Station (20, 1400, 1700) selon l'une quelconque des revendications 8 à 12, dans laquelle l'élément d'information d'itinérance rapide comprend également une quantité de groupes d'itinérance rapide.
